# EUROPEAN PATENT SPECIFICATION

(11) **EP 3 615 868 B1**
(45) Date of publication and mention of the grant of the patent: **04.10.2023**
(21) Application number: 18790317.4
(22) Date of filing: 23.04.2018
(51) Int. Cl.: F24F 12/00, F25B 13/00, F24D 19/00, F25B 41/00, F25B 47/02, F24D 11/02, F25B 41/40

(54) **AIR HANDLING SYSTEM WITH PARTIALLY OR COMPLETELY INDIRECT HEAT PUMP AND METHOD TO REDUCE THE DROP OF THE SUPPLY AIR TEMPERATURE IN DEFROST MODE**
LUFTBEHANDLUNGSSYSTEM MIT TEILWEISE ODER KOMPLETT INDIREKTER WÄRMEPUMPE UND VERFAHREN ZUR VERRINGERUNG DES ABFALLS DER VERSORGUNGSLUFTTEMPERATUR IM ABTAUMODUS
SYSTÈME DE TRAITEMENT D'AIR AVEC POMPE À CHALEUR PARTIELLEMENT OU COMPLÈTEMENT INDIRECTE ET PROCÉDÉ POUR RÉDUIRE LA CHUTE DE TEMPÉRATURE D'AIR D'ALIMENTATION EN MODE DE DÉGIVRAGE

(30) Priority: 28.04.2017 SE 1750517
(43) Date of publication of application: 04.03.2020
(73) Proprietor: FläktGroup Sweden AB, 551 84 Jönköping (SE)
(72) Inventor: STAMENKOVIC, Dusan, 554 64 Jönköping (SE); KRONSTRÖM, Urban, 573 39 Tranås (SE)
(74) Representative: Hård, John Martin
(86) International application number: PCT/SE2018/050413
(87) International publication number: WO 2018/199835

(56) References cited:
- WO-A1-2014/115496
- WO-A1-2014/115496
- WO-A1-2015/194167
- WO-A1-2015/194167
- DE-A1-102007 041 041
- US-A1- 2007 095 519
- US-A1- 2007 095 519
- US-A1- 2011 041 534
- US-A1- 2015 292 786

## Description

### The domain of the invention

The invention at hand is applicable at an air handling system which comprises an air handling unit with heat recovery via a heat pump, but also in combination with other types of adjustable rotary heat exchangers, such as a rotating rotary heat exchanger. The heat pump is according to the invention connected in a new manner, a so called partially indirect manner, in order to reduce the amount of refrigerant in the system, but also to avoid that potentially leaking refrigerant would come in contact with the supply air. Hereby the evaporator of the heat pump is provided directly in the exhaust air stream, while the condenser is provided outside the supply air stream, and the exchange with the supply air is conducted indirectly by shifting off the refrigerant side with a heat-transfer fluid side via a plate heat exchanger. The invention concerns a device and a method with the objective to reduce or fully eliminate the drop in temperature that emerge in the supply air stream while the evaporator is defrosted by running the heat pump reversibly, which implies that the refrigerant in the refrigerant circuit of the heat pump is transferred in the opposite direction, i.e. the heat is temporarily taken from the supply air and is transferred to the exhaust air, in order to defrost the evaporator.

### Background

Within the air handling industry, it is commonly known to use an air handling system, which consists of an air handling unit with a heat recovery function, in combination with a heat pump for further thermal heat recovery from the heat originating from the exhaust air and a transfer to the supply air. Heat recover is used when the system is to be used for heating during the colder part of the year, but the system is also used for recovery of cold during the warmer part of the year. It is most common that these heat pump systems are so called direct systems, i.e. both evaporator as well as condenser are in direct contact with the medium which is to be refrigerated or heated, within air handling of supply - and exhaust air. The heat pump can be an integrated part of an air handling unit or be an independent part. Due to this, in this patent application an air handling system is discussed and not only an air handling unit with heat pump. Further in this application a heat pump which can be operated reversibly is in focus, for when needed defrost the evaporator at frost temperatures. Reversible mode implies that despite that there always is a requirement for heating, the direction of the flow of the refrigerant is changed so that, temporarily during such a short time interval as possible, heat is taken from the coil which normally is the condenser in heating mode. In other words, hot refrigerant is temporarily transferred to the coil which in heating mode is functioning as an evaporator instead of the other way around, for during a short period of time - in defrost mode - thaw the evaporator from the inside. It is of great importance in this background also explain those terms occurring in connection with heat pumps in order to clarify this patent application. Refrigerant is a term concerning the medium which circulates in a refrigerant circuit and which in heating mode pick up heat at a low temperature and high temperature in the evaporator and subsequently releases the heat at a higher temperature and a higher pressure in the condenser. This is obtained by changing states in the compressor and the efficient part of the equation is that the refrigerant can take up and release more energy at the transition between different states (gas, liquid or solid) than only a change in temperatures. To choose the type of refrigerant is conducted based on the domain of usage and the prerequisites in the system which is to be designed. In earlier systems Freon was used as refrigerant, but these have been phased out due to their ozone depletion potential (ODP). Freon have lately been replaced by chlorine free HFC media, which are not causing any damage to the ozone layer, but is unfortunately instead worsening the greenhouse effect. The greenhouse effect is here equivalent with the global warming. The media contributing to the global warming is specified with a so called GWP value. The abbreviation GWP is short for Global Warming Potential. Refrigerants are mostly characterised with the letter R followed by a number which specifies the chemical composition. Heat pumps in current air handling systems mostly contains a refrigerant of the type R410A, which is a refrigerant comprised of a refrigerant mixture including HFC-125 and HFC-32. R410A is low toxic, non-flammable and noncorrosive refrigerant. R410A has an ozone depletion potential of zero (ODP = 0) which is positive. However, it also has a relatively high GWP value of 2088. The background of the invention at hand is that new legislations are under way concerning the usage of refrigerants in refrigerant circuits, and their impact on the climate. Within the European Union the Regulation No 517/2014 of the European Parliament and of the Council of 16 April 2014 on fluorinated greenhouse gases and repealing Regulation (EC) has been drawn up, which is requiring less usage of refrigerants with a negative effect on the climate. The regulation has defined an objective to a cut of approximately 80 % of the total usage of these media by 2030. Already in 2018 the usage of greenhouse gases should heavily be cut. With year 2015 as index the emissions of refrigerants within the European Union should be reduced according to the table below which is taken directly from said regulation. The table illustrates the percentage of the highest level of emissions of hydrofluorocarbons for each year in the European Union with year 2015 as index 100. As seen below there are strong requirements of reducing the hydrofluorocarbons for the European industry including air handling system manufacturers.

| | |
|---|---|
| 2015 | 100 % |
| 2016-2017 | 93 % |
| 2018-2020 | 63 % |
| 2021-2023 | 45 % |
| 2024-2026 | 31 % |
| 2027-2029 | 24 % |
| 2030 | 21 % |

Already known technology in order to fulfil the requirements on reducing greenhouse gases within e.g. air handling systems comprising heat pumps are the following:
1. Reduced filling of refrigerant of current refrigerant R410A, primarily by smaller but more efficient coils in supply - and exhaust air.
2. Usage of a new refrigerant with lower greenhouse effect, i.e. with a lower GWP value.
3. Combination of 1 and 2 above, reduced filling of refrigerant and a new refrigerant.

With this background a number of problems have been identified such as the following:
1. New refrigerants with a lower greenhouse effect (low GWP), and with the possibility to a compact construction of the coils, are flammable. Most of these refrigerants are classified according to the industry standard in class A2L, i.e. "flammable to a low extent". The flammability is normally increased the lower the GWP value of the refrigerant. At a potential leakage in the supply air coil, flammable gas can be released into the supply air, which of course is a non-desired result or even prohibited in several applications.
2. Heat exchangers concerning air, so called DX coils for reversible systems have relatively large inner volumes and subsequently demands relatively high level of filling of refrigerant.
3. Apart from the environmental aspects which concerns the usage of refrigerants there are also other problems. During defrost mode the problem that the supply air temperature temporarily more or less heavily decreases appears, which should be avoided or at least minimised. Older solutions to this problem comprises for instance electro-heated coils or water-heated coils which are installed in the supply air. These are controlled for maintaining the supply air temperature or at least for minimising the drop in temperature that otherwise arises in defrost mode. The drawback is primarily high installation costs. Due to this, there is a clear need of reducing or fully eliminating the temperature drop of the supply air in defrost mode of the evaporator in reversible mode.

US 2007/095519 A1 discloses an air handling system and method for controlling it, comprising an air handling unit with a heat recovery heat exchanger and a reversible heat pump system with a 4-way valve, coupled indirectly to the supply air via a first intermediate heat transfer fluid (HTF) circuit comprising a 3-way control valve, a by-pass line and a buffer tank for, in non-defrost mode, accumulating thermal energy by storing HTF, and, coupled either directly, via a refrigerant-air heat exchanger, or indirectly via a second intermediate HTF circuit, to the exhaust air. The disclosed air handling system further comprises an evaporator defrost mode, which is realised by stopping the refrigerant circuit, and wherein the thermal energy stored in the buffer tank is released and used to heat the supply air**.**

### Description of the invention

With the invention at hand the objective to solve all above mentioned problems by the invention according to a first aspect by an air handling system according to claim 1 which is characterised that the heat pump is partially indirectly connected against the air flows which is described below. The indirect connection enables to in non-defrost mode accumulate heat in a buffer tank connected to the indirect side of the system, and subsequently release this heat in the supply air in defrost mode to counteract reducing of the supply air temperature. The partially indirect connection also provides positive environmental advantages as the used amount of refrigerants is reduced by at least 20-25% while the transition to more environmentally friendly (low GWP, but unfortunately flammable) refrigerants is enabled, wherein the device is well positioned for the future. This is more thoroughly explained below.

In heating mode the device is provided to recover thermal energy from an exhaust air stream and transfer the thermal energy and moisture to a supply air stream. Said air handling system further comprises a heat pump, provided to in heating mode recover thermal energy from the exhaust air stream and transfer the thermal energy to the supply air stream.

The heat pump is provided to exchange thermal energy between the exhaust air stream and the supply air stream partially in an indirect manner, that is indirectly with the supply air stream but directly with the exhaust air stream.

Further, the control valve is provided to control the subset of the heat-transfer fluid which is to pass the buffer tank for charging and the subset of the heat-transfer fluid which is to pass the by-pass line for releasing thermal energy from the buffer tank.

The device is characterised by that only the exhaust air side comprises a direct expansion coil (DX coil) while the supply air side instead has a classic liquid coil. In addition, these coils on the liquid side are separated by a plate heat exchanger. In other words, the refrigerant circuit is only in direct contact with the exhaust air stream via its coil - the DX coil - and a potentially leaking refrigerant can thus not leak out in the supply air, which could be devastating, in particular if the refrigerant is flammable, which the new refrigerant types with a low GWP value are by standard. To veer out flammable gas in in premise with humans is definitely not desirable. For heating mode, the DX coil in the exhaust air is the equivalent as the evaporator in the heat pump circuit the same DX coil constitutes condenser in the cooling mode. Further, the refrigerant circuit is connected to a first side of the plate heat exchanger. The condenser constitutes in heating mode of the plate heat exchanger, which is provided "in any possible position", but outside the supply air stream. The same plate heat exchanger is functioning in the cooling mode as evaporator. By shifting off the refrigerant in the plate heat exchanger there is no risk of leakage of flammable refrigerant in the supply air, which otherwise is a problem with the new refrigerants. The second side of the plate heat exchanger is namely connected to a heat-transfer fluid system, which preferably comprises a conventional heat-transfer fluid of some sort, but that is not flammable, and the heat-transfer fluid system also comprises the liquid coil and a circulation pump for regulating/controlling of the flow. By definition a heat-transfer fluid is (in contrast to the refrigerant) a fluid with without changing states transport heat/cold between condenser/evaporator and object/coil which is to be heated or cooled. The fluid can consist of water with or without antifreeze agent. One of the requirements with regards to the heat-transfer fluid is, that despite low temperatures, it should not freeze or be too viscous. Another advantage to only use one DX coil is that the total refrigerant amount is radically decreased a DX coils accommodates approximately 4-5 times as much refrigerant as a plate heat exchanger. To abolish one DX coil and to replace the second DX coil with a plate heat exchanger, which contains much less volume of liquid, results in a radically reduced amount of used refrigerant, which is a prerequisite to reach the low emission targets as the new legislations in e.g. the European Union dictates. An estimation is that the filling of refrigerant in a system according to the invention is reduced by at least 25 % compared to conventional systems of the same size. Another advantage is that the pressure classification for liquid coils is definitely lower than for DX coils, for instance up to a maximum pressure of 10 bar compared to a maximum pressure of 45 bar, which primarily is positive from a cost perspective. Also, there is a great difference concerning the pressure drop on the air side, with advantage for the liquid coil compared to the DX coil, which contributes to reduced operational costs in particular for the expense of electricity for operating an air handling system according to the invention. Among others, a liquid coil can better be optimised concerning the number of rows of pipe and spacing of fins, which among others affects the efficiency and the drop in pressure on the air side. The DX coil is on the air side provided in the exhaust air stream in the flow direction after the rotary heat exchanger and the liquid coil is provided in the supply air stream in the flow direction after the rotary heat exchanger. By above described air handling system the heat pump exchanges thermal energy between the exhaust air stream and the supply air stream in a partially indirect way, i.e. indirect exchange with the supply air stream via the plate heat exchanger and the liquid coil, but a direct exchange with the exhaust air stream via the DX coil in the refrigerant circuit. An additional safety layer against leakage of refrigerant in the supply air stream has thus been obtained. This implies that it will not constitute a problem with the transition to newer refrigerant types with higher flammability, which earlier was not a possible solution in these types of systems. In addition, the used amount of used refrigerant is considerably lower, which also positively contributes to a lower climate impact, compared to existing air handling systems.

In addition, the above described partially indirect connection implies that the problem with a temporarily temperature drop in the supply air in defrost mode fully or partially is avoided or at least is minimised, which is the objective with the device. By that the heat-transfer fluid circuit also comprises a buffer tank for accumulating of heated heat-transfer fluid, a circulation pump for the circulation of heat-transfer fluid, and a 3-way control valve, which controls the flow of heat-transfer fluid passing through the tank, the system can charge the buffer tank in non-defrost mode. The heat pump is in heating mode run normally so that heat is taken from the exhaust air via the DX coil (the evaporator), and by heat exchange between the refrigerant side and the heat-transfer fluid side in the plate heat exchanger (the condenser), the heat is delivered to the supply air via the liquid coil. The control valve is connected so that the amount of heat-transfer fluid passing through the buffer tank can be controlled, by directing an optional amount to the bottom of the buffer tank while the rest is directed passing by the tank via a by-pass line. With this connection it is possible to charge the buffer tank with the help of the heat pump, the circulation pump and the control valve such that a sufficient amount of heat-transfer fluid of desired temperature is always available in the buffer tank, ready to be used in de frost mode. The buffer tank is dimensioned to suffice as a heat source in defrost mode. In these circumstances there are no previously known partially indirection connections of the type described above. Apart from functioning well in the future concerning the choice of refrigerant, it also solves the problem with a drop in supply air temperature in defrost mode of the evaporator.

According to an embodiment of the air handling system the buffer tank comprises at least a first temperature sensor for measuring the heat-transfer fluid temperature in the buffer tank. Further, at least a second temperature sensor is provided in the supply air stream after the liquid coil, for measuring the supply air temperature in this mode. The air handling system also comprises control equipment which is comprises to, on the basis of the measured values at the temperature sensors, control the heat pump, the circulation pump and the control valve so that the heat-transfer fluid in the heat-transfer fluid circuit is heated to a desired temperature and is accumulated in the buffer tank in non-defrost mode.

According to another embodiment of the air handling system the control equipment is provided to in defrost mode control so that the accumulated heat energy is released to the supply air stream, by circulating the heat-transfer fluid by means of the circulation pump in the heat-transfer fluid circuit and at the same time control the control valve so that an sufficient amount of heat-transfer fluid flows through the buffer tank, preferably in the lower part of the tank, wherein the heated heat-transfer fluid leaves the tank, preferably at its upper part, and flows to the liquid coil in the supply air. Thus, heat is released by heat exchange between the heat-transfer fluid in the liquid coil and the supply air which passes the liquid coil, wherein the drop in temperature at the supply air is reduced or eliminated under defrost mode. As the device has a buffer with heat that can be added in defrost mode the system does not need any supplements concerning heating requiring a lot of electricity, or other devices in the supply air which can result in undesirable drop of pressure and additional costs. As the system handles the refrigerant problem the problem of drop in temperature in the supply air is also handled by the invention in an efficient way.

According to an embodiment of the air handling system the buffer tank comprises an electric heater provide to heat the heat-transfer fluid in the buffer tank when needed. This provides the possibility to only heat by means of the electric heater, but more preferably that if the heat pump has problems to suffice by the control system keeping the supply air temperature at a desired temperature in defrost mode, the electric heater can provide additional heat to the heat-transfer fluid in the tank. The control system indicates that the supply air temperature cannot be met, despite that the heat pump is in full operation, the control system manages so that the electric heater is started wherein at least a sub part or the whole amount of the heat-transfer fluid is led through the buffer tank for maximal utilisation of the heat.

According to an embodiment of the air handling system the refrigerant circuit comprises refrigerant with a so called GWP value that is equal or lower than 1000. More preferably is to use refrigerants with a GWP value of 700 or even lower. A GWP value at 1000 equals more than half of the impact of global warming compared to the refrigerant which nowadays is used in this type of air handling systems, R410A with a GWP value of 2088. This in combination with a DX coil which is smaller compared with a DX coil at a conventional system implies a considerably lower impact with regards to the greenhouse effect. By the partially indirect heat pump connection in an air handling system according to the invention, there are no potential problems or risks in using new and future proof refrigerants with a low GWP in connection with a system that solves the problems with the temperature drop in reversible defrost mode of the evaporator. Known solutions with direct contact between refrigerant and supply air will have to solve the problem with the higher flammability as low GWP refrigerants have, by surveillance devices in combination with small coils comprising small volumes of refrigerant and as well complement with known solutions in order to eliminate the risk for the drop in temperature in defrost mode.

According to an embodiment of the air handling system the refrigerant comprises circuit refrigerant of the type that can be called HFO refrigerants, which mainly are mixtures comprising HFO. HFO refrigerants is a relatively new group of synthetic refrigerants which contributes to an environmentally acceptable phasing out of older types of so called HFC refrigerants with high GWP, by means that the HFO media have low GWP. The reduced total usage of refrigerant in a system according to the invention, in combination with a considerably more environmentally friendly refrigerant as HFO, contributes in total to a radically reduced environmental impact, simultaneously as the drop in supply air temperature is eliminated with a solution according to the invention.

According to an embodiment of the air handling system the heat-transfer fluid circuit comprises a freeze protected heat-transfer fluid in the form of a glycol based liquid mixture. This fluid is preferably ethylene glycol or similar, which is a heat-transfer fluid well known and readily accessible. Furthermore, it has properties which makes it easy to pump through in the heat-transfer fluid circuit and that as well can be heated and stored in the buffer tank for utilisation in defrost mode.

According to an embodiment of the air handling system the refrigerant is one of the types refrigerant R32, R452B, L41y or L41z. All these specified refrigerants fulfil the requirements with regards to low GWP (GWP<700), why these are of extra interest in order to further reduce the environmental impact. The environmental advantages in combination with the shift of the flammable refrigerant in the plate heat exchanger to a heat-transfer fluid, which in addition can be charged by storing heat in non-defrost mode as well as release of the same in defrost mode, provides in total a very favourable and simple solution concerning both the environmental problems and the supply air temperature problems. According to an embodiment of the air handling system the heat-transfer fluid comprises corrosion inhibitors for inhibiting corrosion in the heat-transfer fluid circuit.

According to an alternative embodiment of the air handling system the first refrigerant circuit of the heat pump is connected fully indirectly to a respective liquid coil in the exhaust air stream as well as the supply air stream. This in order to reach the objective that potentially leaking refrigerant, in particular flammable refrigerant, does not come in contact with any of the air streams, as the exhaust air stream also could imply a danger for the environment or potential leakage from the exhaust air side to the supply air side. Den indirection connection is here conducted via a respective plate heat exchanger, where the first side is connected to a respective heat-transfer fluid circuit and the liquid coils, while the other side of respective plate heat exchanger is connected to the refrigerant circuit, that is the heat pump. In such a way, both the exhaust and the supply air side are secured against leakage by the indirect connection and the total amount of refrigerant has been reduced even more due to that the DX coil entirely has been abolished and has instead been replaced by liquid coils in both the supply and exhaust air in this embodiment. In this case both plate heat exchangers constitute evaporator respectively condenser by their exchange of heat to respective heat-transfer fluid at the exhaust and supply air side. Respective heat-transfer fluid circuit also comprises a circulation pump for circulation of heat-transfer fluid between liquid coil and plate heat exchanger. Secondly the device comprises a buffer tank in the heat-transfer fluid circuit which is connected to the liquid coil in the supply air stream, and further a 3-way control valve and a by-pass line. Here the control valve is provided to fully or partially or not at all bypass the buffer tank for controlling the amount of heat-transfer fluid which should pass through the buffer tank respectively passing by the buffer tank via the by-pass line. Further, the buffer tank is provided in non-defrost mode accumulate thermal energy by storing a subpart of the heat-transfer fluid in the buffer tank, and further provided to in defrost mode of the evaporator release said accumulated thermal energy in the supply air stream via the liquid coil in the supply air stream. The control valve is as mentioned above provided to control how size of the subpart of the heat-transfer fluid which should pass the buffer tank respectively through the by-pass line to charge respectively release heat from the buffer tank to the liquid coil in the supply air. By means of the device it is now possible to at a fully indirectly connected heat pump solve the problem that the drop in temperature in reversible defrost mode which implies a solution for the future where flammable refrigerants can be used without any problems. None known solutions can handle this problem.

According to the second aspect of the air handling system the objective is met through a method according to the preamble in patent claim 12, which is characterised by that the heat pump partially is indirectly connected towards the air streams as explained in connection with patent claim 1-10, wherein the method is characterised by that in non-defrost mode accumulate heat in a buffer tank connected to the indirect side of the system, and subsequently release this heat in the supply air stream in defrost mode to counteract a reduction of the supply air temperature. By that the heat-transfer fluid circuit comprises the buffer tank for the accumulation of heated heat-transfer fluid, a circulation pump for the circulation of heat-transfer fluid in the heat-transfer fluid system, and a 3-way control valve for controlling of the flow of heat-transfer fluid through the tank, the system can charge the buffer tank in non-defrost mode. The heat pump is in heating mode operated normally such that heat is taken from the exhaust air via the DX coil (the evaporator), and by heat exchange between refrigerant side and the heat-transfer fluid side in the plate heat exchanger (the condenser), the heat is released in the supply air via the liquid coil. The control valve is connected such that the amount of heat-transfer fluid through the buffer tank is controlled by that an optional amount of heat-transfer fluid is led to the bottom of the buffer tank while the remaining amount is led passing by the tank via a by-pass line. By means of this connection the buffer tank can be charged with help of the heat pump, the circulation pump and the control valve such that a sufficient amount of heat-transfer fluid of desired temperature always is available in the buffer tank, ready to be used in defrost mode. The buffer tank is dimensioned to suffice as heat source in defrost mode. A control equipment controls the operation of the heat pump, the circulation pump and the control valve for controlling the amount of heat-transfer fluid which flows through the buffer tank respectively through the by-pass line, for storage of heat energy in non-defrost mode. The control system also manages that stored heat-transfer fluid through the circulation pump, and by means of the control valve heat-transfer fluid flows from the buffer tank to the second coil (in the supply air stream) and back to the plate heat exchanger in defrost mode. By storing at least a sub part of the heat-transfer fluid in the buffer tank, i.e. not too much nor too little for in the specific operation modes be able to maintain the supply air temperature, and to use this heat energy for releasing this to the supply air stream in the defrost mode, the drop in temperature is avoided or minimised, in the reversible defrost mode of the evaporator. The partially indirect connection provides, as explained above, also positive environmental advantages, as used amount of refrigerant is radically reduced while a transition to more environmentally friendly (low GWP) refrigerants is enabled, wherein the device will most likely be used in the future. By in non-defrost mode accumulate heat energy in the heat-transfer fluid - on the indirect side of the system - by storage of said heat-transfer-fluid in the buffer tank, and subsequently used the accumulated heat energy in defrost mode, in order to heat the liquid coil in the supply air stream by heat exchange between the accumulator media and the supply air stream, installation of devices with high electricity consumption or other costly heating systems are avoided, which in other cases would maintain the supply air temperature. The system minimises or fully eliminates the drop in temperature which otherwise emerges in reversible defrost mode of the evaporator.

Further, a control equipment controls the operation of the heat pump, the circulation pump and the control valve, wherein the amount of heat-transfer fluid which passes the buffer tank and the amount of heat-transfer fluid which passes the by-pass line is controlled for storing thermal energy in non-defrost mode, by storing at least a subset heat-transfer fluid in the buffer tank and by releasing thermal energy to the supply air stream in defrost mode, by means that stored heat-transfer fluid flows from the buffer tank to the second coil and further to the secondary circuit of the plate heat exchanger.

According to an embodiment of the method the buffer tank comprises at least a first temperature sensor for measuring the temperature of the heat-transfer fluid in the buffer tank. Further at least a second temperature sensor is provided in the supply air stream after the liquid coil, for measuring the supply air temperature in this mode. According to the method the heat pump, the circulation pump and the control valve is controlled such that the heat-transfer fluid in the heat-transfer fluid circuit is heated to desired temperature and is accumulated in the buffer tank in non-defrost mode, on the basis of the measurements from the temperature sensors.

According to an embodiment of the method the control equipment is managing to in defrost mode keep the temperature in the supply air stream at desired value by controlling the heat pump, the circulation pump and the control valve, on the basis of the value from the second temperature sensor. Thus, the device is controlled such that an appropriate amount of heated heat-transfer fluid flows from the buffer tank to the second coil in the supply air stream and further to the second side of the plate heat exchanger, wherein the accumulated heat energy is released to the supply air stream for minimising of the drop in temperature of the supply air in defrost mode.

According to an embodiment of the method to reduce or fully eliminate the drop of the supply air temperature in defrost mode the heat-transfer fluid is heated with an electric heater, which is provided in the buffer tank and which heats the stored heat-transfer fluid in the tank to desired temperature. In contrast to installing an electric heater directly into the supply air as already known solutions do, the installed effect can be held low, as the electricity needed for defrosting, can be said to be accumulated in the tank. The heat-transfer fluid is heated in non-defrost mode, i.e. under a longer period of time, which implies that the electricity needed for the electric heater can be low. The heat-transfer fluid is heated until that a desired temperature in the tank is reached and can then be kept warm until that defrosting is initiated and the need of heating of the supply air is indicated. This is a easy way of heating the accumulator medium and that preferably is used in combination with charging via the heat pump.

The circulation pump could for instance be controlled by the number of revolutions or have a constant flow, among other solutions.

The compressor could for instance be controlled by the number of revolutions or have a constant number of revolutions per time unit, among other solutions.

The invention has illustrated several advantages versus already known solutions. These are:
- No problems in using flammable refrigerants, as potential leakage of refrigerant to the supply air has been eliminated.
- Reduced total amount of refrigerant compared to conventional equivalent air handling system.
- Solution which in the future can be used for the transition to refrigerants with low GWP, which often are relatively flammable.
- Reduced environmental impact and a more secure system.
- Lower drop in pressure on the air side.
- Storage of heat energy during operation when non-defrost mode is active and the usage of this heat energy in defrost mode for eliminating or reducing of the drop in temperature in defrost and reversible mode.
- If an electric heater is used to heat the heat-transfer fluid in the buffer tank the electricity needed is lower compared to a pure post heating coil as the heating is conducted slowly and that the heated heat-transfer fluid is stored in the tank.

### Brief description of the figures

The enclosed figures 1-3 illustrates the following:
- Fig.1 illustrates a flowchart of an air handling system according to the invention to in winter mode, i.e. a mode where the supply air is heated by means of a heat pump, at the same time as heat-transfer fluid is stored in a buffer tank prior the subsequent defrosting of the evaporator of the heat pump.
- Fig.2 illustrates a flowchart of an air handling system according to the invention in defrost mode.
- Fig.3 illustrates a flowchart of an air handling system according to the invention in summer mode, i.e. a mode where the supply air is cooled by means of the heat pump.

The construction of the invention at hand is illustrated in the following detailed description of an example of an embodiment of the invention while referring to enclosed figure which shows an embodiment, at the same time not limited to this embodiment of the invention.

### Detailed description of the figures

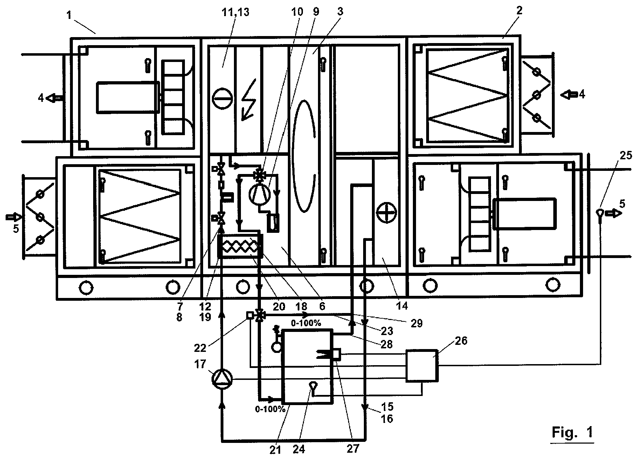

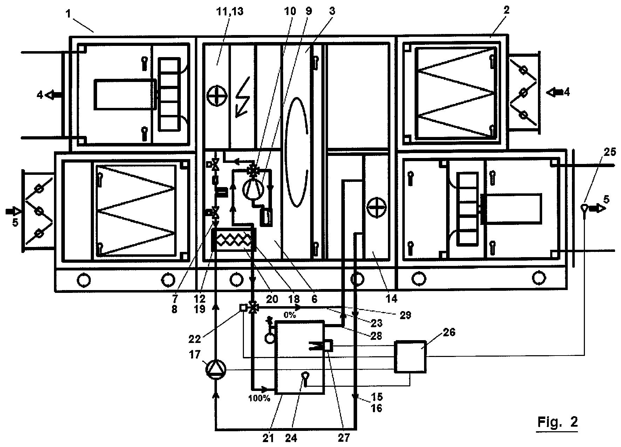

**Fig.1** illustrates an air handling system 1 according to the invention to in winter mode, i.e. when there is a need to heat the supply air. The air handling system 1 comprises an air handling unit 2 which itself comprises an adjustable rotary heat exchanger 3. This is preferably a rotating rotary heat exchanger 3 and is provided to in heating mode recover thermal energy from an exhaust air stream 4 and to transfer this thermal energy to a supply air stream 5. In the illustrated embodiment the air handling system 1 also comprises a heat pump 6, this also provided to in a heating mode recover thermal energy from the exhaust air stream 4 and to transfer this thermal energy to the supply air stream 5. In the figure the heat pump 6 is integrated as an embedded part within the air handling unit 2 but can also be an independent unit in connection to the exhaust and the supply air stream 4, 5. However, it is important that those parts of the heat pump 6 comprising refrigerant are separated from the supply air stream 5 without any risk of potential leakage of refrigerant to the supply air. The heat pump 6 comprises at least a refrigerant circuit 7 which comprises a refrigerant 8, a compressor 9, a 4-way valve 10, an evaporator 11 and a condenser 12. In addition to this, a plurality of other parts can be comprised in the heat pump 6. However, these additional parts are not illustrated here. The heat pump 6 is comprises for so called reversible mode for defrosting of the evaporator 11 when needed, as freezing of the evaporator 11 is common in heating mode in connection with humid exhaust air. In reversible mode thermal energy during the defrosting is taken from the supply air stream 5 and is transferred to the exhaust air stream 4, instead of the contrary, which is the normal for heating mode. This is conducted by via the 4-way valve 10 shifting the flow direction of the refrigerant 8, wherein heated refrigerant 8 is transferred to what in heating mode normally is the evaporator 11, instead of to the condenser 12. This is called reversible mode - to direct the refrigerant 8 in which normally would be the wrong direction (see defrost mode figure 2). In the heating mode the heat is normally taken from the exhaust air stream 4 by having the evaporator 11 provided there. For this purpose, a first coil 13 in the form of a DX coil 13, is provided in the exhaust air stream 4 in the flow direction after the rotary heat exchanger 3. The DX coil 13 is connected to the refrigerant circuit 7 of the heat pump 6 and the DX coil13 in heating mode is thus the same as the evaporator 11. In order to be able to release thermal energy in the supply air stream 5 a second coil 14, in the form of a liquid coil 14, is provided in the supply air stream 5, in the flow direction after the rotary heat exchanger 3. The liquid coil 14 is connected to a heat-transfer fluid circuit 15 which comprises a heat-transfer fluid 16 and at least a circulation pump 17. The circulation pump 17 is provided to circulate the heat-transfer fluid 16 in the heat-transfer fluid circuit 15. The refrigerant circuit 7 at the heat pump 6 is connected to a first side 18 of a plate heat exchanger 19, which in heating mode constitutes the condenser 12 in the heat pump circuit. The heat-transfer fluid circuit 15 which is connected to the liquid coil 14 in the supply air stream 5, is in its turn connected to a second side 20 of the same plate heat exchanger 19. Thus, the plate heat exchanger 19, the refrigerant circuit 7 and the heat-transfer fluid circuit 15 are separated from each other, and the heat pump 6 thus exchange energy between the exhaust air stream 4 and the supply air stream 5 in a partially indirect manner, i.e. indirectly with the supply air stream 5 via the plate heat exchanger 19, but directly with the exhaust air stream 4 via the DX coil 13. As the entire refrigerant circuit 7 is fully separated from the supply air stream 5 there is none or at least a minimal risk that a potential leakage of the refrigerant 8 can contaminate the supply air. Thus, the problem concerning the transition to refrigerants 8 of flammable type is solved, which in the current situation is a problem for systems comprising refrigerants with low GWP values. In addition, it implies that the total filling of refrigerant is radically reduced by that a second DX coil in the supply air stream 5 has been abolished. The system will thus be competitive also in the coming future. Preferably the refrigerant circuit 7 comprises refrigerant 8 chosen from refrigerants with GWP under 1000, and more preferably GWP under 700. Also, preferably the refrigerant 8 is of the HFO-type, mixtures of HFO/HFC/HC or pure HC. Examples of preferred refrigerants are R32, R452B, L41y, L41z and HC/R290. The type of heat-transfer fluid 16 is customised to the system and preferably contains corrosion inhibitors to prevent the occurrence of corrosion and is preferably a glycol base heat-transfer fluid 16 as this is a common type of heat-transfer fluid with for the purpose appropriate properties.

According to an embodiment of the air handling system, which is though not illustrated with a figure, the supply air side is provided in exactly the same manner as it has been explained above, while the same configuration also is provided on the exhaust air side, i.e. a - now named as first - coil 13 is provided in the exhaust air stream 4 in the flow direction after the rotary heat exchanger 3, which first coil 13 is not a DX coil but instead of the type liquid coil, exactly as on the supply air side. This is connected to a first heat-transfer fluid circuit comprising a first heat-transfer fluid and a first circulation pump. The latter is provided to circulate the first heat-transfer fluid in the first heat-transfer fluid circuit. The first heat-transfer fluid circuit is connected to a first side of a first plate heat exchanger, which in heating mode constitutes the evaporator 11. As mentioned above the supply air side is as exactly previously equipped with a liquid coil 14 - here called the second liquid coil 14 - in the supply air stream 5, in the flow direction after the rotary heat exchanger 3. This second liquid coil 14 is connected to the heat-transfer fluid circuit 15 - here called the second heat-transfer fluid circuit 15, which comprises the heat-transfer fluid 16 - here called the second heat-transfer fluid 16, and the circulation pump 17 - here called the second circulation pump 17. The second heat-transfer fluid circuit 15 is connected exactly as previously described to the second side 20 of the plate heat exchanger 19 - here called the second plate heat exchanger 19, which in heating mode constitutes condenser 12. The refrigerant circuit 7 of the heat pump 6 is further connected between a second side of the first plate heat exchanger and a first side 18 of the second plate heat exchanger 19, wherein the heat pump 6 exchanges energy between the exhaust air stream 4 and the supply air stream 5 in a fully indirect manner, i.e. indirectly with the supply air stream 5 and indirectly with the exhaust air stream 4, via the plate heat exchanger and the first and the second heat-transfer fluid circuit.

Both above described embodiments - partially indirect systems and fully indirect system - are complemented with below described device to solve the problem which is the basis for this patent application, namely to prevent or at least reduce the drop in temperature of the supply air which easily occurs in defrosting of the evaporator 11 by reversible mode. Below the invention is described in connection with figure 1 only for the partially indirect connection of the heat pump 6, but it should be realized that the fully indirect connection can be equipped with exactly the same device and control equipment, to achieve the same solution to the same problem.

As earlier mentioned in during heating season, i.e. in heating mode, the problem of the temporarily drop in temperature in the supply air stream 5 in defrost mode arises as the heat then temporarily is taken from the supply air stream 5, why the "indirect side" of the device is supplemented with the possibility to direct the circulation of the heat-transfer fluid 16 such that it in non-defrost mode is heated and stored in a buffer tank 21. The indirect side can be described by following the flow in heating mode, which is the mode shown in figure 1. To start at the circulation pump 17 the heat-transfer fluid 16 flows to the second side of the condenser 12/the plate heat exchanger 19 and here collects the heat which is left by the "recovery" of the heat pump 6 of the heat from the exhaust air stream 4 via the evaporator 11/the first coil 13. Subsequently to this the heat-transfer fluid 16 further flows to a 3-way control valve 22, which is provided to direct all, nothing or parts of the flow of the heat-transfer fluid 16 either directly to the buffer tank 21, preferably to its bottom part, or to a by-pass line 23. The latter directs the amount of flow which potentially arrives at the by-pass line 23 passing by the buffer tank 21 and is after the tank connected with a supply line 28 from upper part of the buffer tank 21, in a pipe connection 29. An alternative placement of the control valve 22 is in the pipe connection 29. The heat-transfer fluid 16 thus flows either through the buffer tank 21 and out from the same through the supply line 28 and further to the pipe connection 29, or through the by-pass line 23 to the pipe connection 29. It can also be so that a subset of the heat-transfer fluid 16 flows the other way and remaining parts of the heat-transfer fluid flow the other way, wherein the flows meet in the pipe connection 29. Subsequently to this the heat-transfer fluid flows in heating mode 16 further to the second coil 14, and subsequent to this further back to the circulation pump 17, wherein the heat-transfer fluid circuit 15 is closed. In figure 1 is also illustrated that the buffer tank 21 is supplemented with an electric heater 27, which can be used when needed to heat the stored heat-transfer fluid 16, if the capacity of the heat pump 6 does not fully suffice, or if it goes to slowly to heat the "defrost reserve", which could occur if the need of heating is great and the electricity consumption of the heat pump 6 together with the adjustable rotary heat exchanger 3 barely manages to heat the supply air stream 5 in heating mode, but has difficulties in covering the heating of the heat-transfer fluid 16 for storage in the buffer tank 21. The electric heater 27 is an optional supplement if one believes that there is a need for this. According to the preferred embodiment the buffer tank 21 comprises a first temperature sensor 24 for measurement of the temperature of the stored heat-transfer fluid 16 in the buffer tank 21 and that in the supply air stream 5 a second temperature sensor 25 is provided for measurement of the temperature of the supply air after the second coil 14. Further, there is a control system 26, which controls among others the operation of the circulation pump 17 and the control valve 22, wherein the amount of heat-transfer fluid 16 is directed either to pass the buffer tank 21 for charging of the buffer tank, i.e. storage of heated heat-transfer fluid 16, while the defrosting function is not active, alternatively that the heat-transfer fluid 16 is directed passing by the buffer tank 21 via the by-pass line 23, if for instance the stored heat-transfer fluid 16 in the buffer tank 21 already has reached a desirable temperature. Both flow directions can also be used at the same time as, wherein a subset of heat-transfer fluid 16 flows either way, depending on the operation mode and the programmed control system. The same control system also manages the electric heater 27 and preferably based on the values at the first and the second temperature sensor 24, 25. An example of control for this operation mode can be the following:

### Heating mode

In order to keep the temperature of the supply air in defrost mode the system is dimensioned such that the volume of heat-transfer fluid 16 that can be stored in the buffer tank 21 is sufficient, and the system is adapted in order for the buffer tank 21 to be charged properly during a certain time in the ordinary heating mode - preferably the charging should be conducted in maximum one hour. In order to charge the buffer tank 21 during this time the flow of heat-transfer fluid 16 is directed for instance so that during normal workload (heating mode) at least 10 % flows through the buffer tank 21 and the remaining 90 % flows through the by-pass line 23 for heating of the supply air stream 5 in an ordinary manner via the second coil 14 in heating mode - thus at the same time as heating of the supply air via the second coil 14 and the charging of heated heat-transfer fluid 16 in the buffer tank 21. If the need of heating in the supply air is not that great, preferably the flow of heat-transfer fluid 16 is directed such that the charging can be conducted more swiftly. If the workload of the heat pump 6 only corresponds for instance to 50 % of the total capacity or lower, the flow through the buffer tank 21 is successively increased (if lowered need of heating) to a maximum of 100 %, wherein the flow through the by-pass line 23 decreases correspondingly. If the need for heating is great, and if the heat pump 6 has to work harder, also the electric heater 27 can gradually be used to charge the tank if so wished for. An example could be that the workload of the heat pump 6 for instance exceeds 70 % of the maximum capacity, the electric heater 27 is started in order to be able to heat the stored heat-transfer fluid 16 in a sufficient period of time, simultaneously as heating of the supply air is conducted. The control system 26 manages the control of all components during operation. In such a way, the device is controlled so it always exists a heating buffer to use in defrost mode, wherein the temperature in the supply air stream 5 can be held at an acceptable level. The control system is preferably programmed and the buffer tank 21 dimensioned such that the temperature of the supply air stream 5 never drops below 15-20°C. According to the preferred example a requirement is that the buffer tank 21 should be fully charged before defrosting is permitted and this requirement is fulfilled when the temperature at the first temperature sensor 24 is greater than the temperature at the second temperature sensor 25, T₂₄ ≥T₂₅, preferably 3-10 °C higher than the temperature at the second temperature sensor 25.

### Defrost mode / heating mode

**Fig.2** illustrates the air handling system 1 according to the invention in "winter mode" i.e. when there is a need to heat up the supply air, and that defrosting is conducted. Example of control for this operation mode can be the following. When the buffer tank 21 is fully charged with heated heat-transfer fluid 16 defrost mode can be started. When there is a need to defrost the evaporator 11/the first coil 13 the flow of direction is shifted on the refrigerant 8 via the 4-way valve 10 in a conventional manner at reversible defrosting, wherein heated refrigerant 8 is directed directly to the evaporator 11 instead of to the condenser 12. As the heat now temporarily is taken from the supply air stream 5, indirectly via the second coil 14, the supply air temperature will as mentioned decrease if no action is put in place. Thus, the control equipment 26 manages so that the control valve 22 is opened for 100 % flow of heat-transfer fluid through the buffer tank 21, wherein the by-pass line 23 simultaneously is shut. Thus, all available heated heat-transfer fluid 16 will be transferred to the second coil 14 for maintaining of the temperature in the supply air stream 5, and the heat-transfer fluid 16 subsequently flows further back passing by the circulation pump 17 and to the second side 20 of the plate heat exchanger 19, and subsequently back to the buffer tank 21. In the plate heat exchanger 19 a heat exchange is conducted with the refrigerant circuit 7, which via the heat pump function uses the heat to defrost the evaporator 11/the first coil 13. As earlier mentioned the buffer tank 21 is dimensioned to suffice to maintain the supply air temperature and at the same time defrost the evaporator 11. The control equipment 26 controls the whole process and manages so that the defrosting continues as long as there is a need or during a predefined period of time, and controls the temperature in the supply air stream 5 via the second temperature sensor 25 and in the buffer tank 21 via the first temperature sensor 24. Further, the electric heater 27 is also activated if there is an additional need to heat the heat-transfer fluid 16 in the tank.

### Summer mode / cooling mode

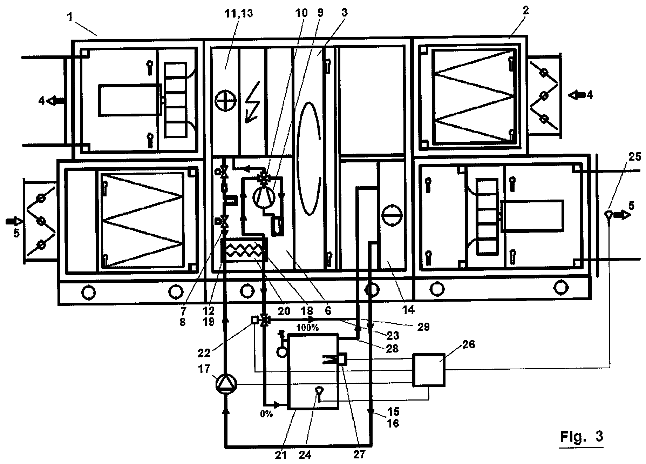

**Fig.3** illustrates the air handling system 1 according to the invention in "summer mode" i.e. when there is a need instead of cooling the supply air. In order to cool the supply air stream 5 heat is taken from the supply air stream by circulating the heat-transfer fluid 16 in the heat-transfer fluid circuit 15 between the second liquid coil 14 and the plate heat exchanger 19, in which the heat is shifted down against the refrigerant circuit 7. The heat is left in the exhaust air stream 4 and is ventilated out in the open air. On the heat-transfer fluid side, in this operation mode, the buffer tank 21 is fully bypassed by having the control equipment 26 managing the control valve to be fully shut against the buffer tank 21 but fully open against the by-pass line 23, as there is no need to store the heat-transfer fluid 16 in the buffer tank 21.

### LIST OF COMPONENTS

1= air handling system
2= air handling unit (AHU)
3= rotary heat exchanger (RHE)
4= exhaust air stream
5= supply air stream
6= heat pump (HP)
7= refrigerant circuit
8= refrigerant
9= compressor
10= 4-way valve
11= evaporator
12= condenser
13= first coil
14= second coil
15= heat-transfer fluid circuit
16= heat-transfer fluid
17= circulation pump
18= primary circuit of plate heat exchanger
19= plate heat exchanger
20= secondary circuit of plate heat exchanger
21= buffer tank
22= control valve
23= by-pass line
24= first temperature sensor
25= second temperature sensor
26= control equipment
27= electric heater
28= supply line
29= pipe connection

## Claims

1. Air handling system (1) comprising an air handling unit (2) provided with an adjustable rotary heat exchanger (3), which in heating mode is provided to recover thermal energy from an exhaust air stream (4) and transfer the thermal energy and moisture to a supply air stream (5), said air handling system (1) further comprises a heat pump (6), provided to in heating mode recover thermal energy from the exhaust air stream (4) and transfer the thermal energy to the supply air stream (5), and the heat pump (6) comprises at least one refrigerant circuit (7) with a refrigerant (8), a compressor (9), a 4-way valve (10), an evaporator (11) and a condenser (12), wherein the heat pump (6) is provided to in so called reversible mode for defrosting of the evaporator (11) by means of the 4-way valve (10) shifting the flow direction of the refrigerant (8), wherein the heated refrigerant (8) is directed to the evaporator (11) instead of to the condenser (12), wherein a first coil (13) is provided in the exhaust air stream (4) in the flow direction after the rotary heat exchanger (3), wherein the first coil (13) is of the type DX coil and is connected to the refrigerant circuit (7) and in the heating mode constitutes the evaporator (11), further a second coil (14) is provided in the supply air stream (5) in the flow direction after the rotary heat exchanger (3), wherein the system (1) comprises a heat-transfer fluid circuit (15), which comprises a heat-transfer fluid (16) and a circulation pump (17) provided to circulate the heat-transfer fluid (16) in the heat-transfer fluid circuit (15), wherein the second coil (14) is of the type liquid coil and arranged to be connected to the heat-transfer fluid circuit (15), wherein the system further comprises a plate heat exchanger (19) which comprises a primary circuit (18), wherein the refrigerant circuit (7) is arranged to be connected to the primary circuit (18), wherein the plate heat exchanger (19) in the heating mode constitutes the condenser (12), wherein the plate heat exchanger (19) comprises a secondary circuit (20), wherein the heat-transfer fluid circuit (15) is arranged to be connected to the secondary circuit (20), wherein the heat pump (6) is provided to exchange thermal energy between the exhaust air stream (4) and the supply air stream (5) partially in an indirect manner, that is indirectly with the supply air stream (5) but directly with the exhaust air stream (4), and the heat-transfer fluid circuit (15) further comprises a buffer tank (21), a 3-way control valve (22) and a by-pass line (23), wherein the control valve (22) is provided to entirely or partially bypass the buffer tank (21) via the by-pass line (23), and the buffer tank (21) is provided to in non-defrost mode accumulate thermal energy by storing a subset of the heat-transfer fluid (16) in the buffer tank (21), and is further provided to in the defrost mode of the evaporator (11) release said accumulated thermal energy into the supply air stream (5) via the second coil (14), and the control valve (22) is provided to control the subset of the heat-transfer fluid (16) which is to pass through the buffer tank (21) for charging the buffer tank (21) and for releasing thermal energy from the buffer tank (21), and to control the subset of the heat-transfer fluid (16) which is to pass via the by-pass line (23).

2. Air handling system (1) according to claim 1, wherein the buffer tank (21) comprises at least one first temperature sensor (24), wherein at least one second temperature sensor (25) is provided in the supply air stream (5) after the second coil (14), and the air handling system (1) comprises control equipment (26) which is provided to control that the heat-transfer fluid (16) is heated to a desired temperature and is stored in the buffer tank (21) by controlling the heat pump (6), the circulation pump (17) and the control valve (22) on the basis of the values from the temperature sensors (24, 25).

3. Air handling system (1) according to claim 2, wherein the control equipment (26) is provided to in defrost mode hold the temperature in the supply air stream (5) at a desired value by controlling the heat pump (6), the circulation pump (17) and the control valve (22) such that an appropriate amount of heated heat-transfer fluid (16) flows from the buffer tank (21) to the second coil (14), wherein the accumulated thermal energy is released to the supply air stream (5) for minimising the temperature drop of the supply air stream in defrost mode.

4. Air handling system (1) according to any of the above claims, wherein the buffer tank (21) comprises an electric heater (27) which is provided to heat the heat-transfer fluid (16) in the buffer tank (21) to a desired temperature.

5. Air handling system (1) according to any of the above claims, wherein the refrigerant circuit (7) comprises refrigerant (8) with a GWP ≤ 1000.

6. Air handling system (1) according to any of the above claims, wherein the refrigerant circuit (7) comprises refrigerant (8) of the type HFO.

7. Air handling system (1) according to any of the above claims, wherein the heat-transfer fluid circuit (15) comprises a heat-transfer fluid (16) based on glycol.

8. Air handling system (1) according to any of the above claims, wherein the refrigerant (8) is a HFC refrigerant, preferably R32.

9. Air handling system (1) according to any of the claims 1-7, wherein the refrigerant (8) is a mixture of at least two of the types HFO, or HFC, or HC refrigerants, preferably R452B, L41y, or L41z.

10. Air handling system (1) according to any of the above claims, wherein the heat-transfer fluid (16) comprises corrosion inhibitors.

11. Air handling system (1) comprising an air handling unit (2) provided with an adjustable rotary heat exchanger (3), which in heating mode is provided to recover thermal energy from an exhaust air stream (4) and transfer the thermal energy and moisture to a supply air stream (5), said air handling system (1) further comprises a heat pump (6), provided to in heating mode recover thermal energy from the exhaust air stream (4) and transfer the thermal energy to the supply air stream (5), and the heat pump (6) comprises at least one refrigerant circuit (7) with a refrigerant (8), a compressor (9), a 4-way valve (10), an evaporator (11) and a condenser (12), wherein the heat pump (6) is provided to in so called reversible mode for defrosting of the evaporator (11) by means of the 4-way valve (10) shifting the flow direction of the refrigerant (8), wherein the heated refrigerant (8) is directed to the evaporator (11) instead of to the condenser (12), wherein a first coil (13) is provided in the exhaust air stream (4) in the flow direction after the rotary heat exchanger (3), wherein the system (1) comprises a first heat-transfer fluid circuit, wherein the first coil (13) is of the type liquid coil and is connected to the first heat-transfer fluid circuit which comprises a first heat-transfer fluid and a first circulation pump provided to circulate the first heat-transfer fluid in the first heat-transfer fluid circuit, wherein the system further comprises a first plate heat exchanger which comprises a primary circuit, and wherein the first heat-transfer fluid circuit is connected to the primary circuit of the first plate heat exchanger, which in the heating mode constitutes the evaporator, further a second coil (14) is provided in the supply air stream (5) in the flow direction after the rotary heat exchanger (3), wherein the system (1) comprises a second heat-transfer fluid circuit (15) comprising a second heat-transfer fluid (16) and a second circulation pump (17) provided to circulate the second heat-transfer fluid (16) in the second heat-transfer fluid circuit (15), wherein the second coil (14) is of the type liquid coil and is arranged to be connected to the second heat-transfer fluid circuit (15), wherein the system further comprises a second plate heat exchanger (19) which comprises a secondary circuit (20) arranged to be connected to the second heat-transfer fluid circuit (15), which in the heating mode constitutes the condenser (12), wherein the first plate heat exchanger comprises a secondary circuit, wherein the second plate heat exchanger (19) comprises a primary circuit (18), wherein the refrigerant circuit (7) of the heat pump (6) is arranged to be connected between the secondary circuit of the first plate heat exchanger and the primary circuit (18) of the second plate heat exchanger (19), wherein the heat pump (6) exchanges thermal energy between the exhaust air stream (4) and the supply air stream (5) in a fully indirect manner, that is indirectly with the supply air stream (5) and indirectly with the exhaust air stream (4), via the first and the second plate heat exchangers, and the second heat-transfer fluid circuit (15) further comprises a buffer tank (21), a 3-way control valve (22) and a by-pass line (23), wherein the control valve (22) is provided to entirely or partially bypass the buffer tank (21) via the by-pass line (23), and the buffer tank (21) is provided to in non-defrost mode accumulate thermal energy by storing a subset of the heat-transfer fluid (16) in the buffer tank (21), and is further provided to in the defrost mode of the evaporator (11) release said accumulated thermal energy into the supply air stream (5) via the second coil (14), and the control valve (22) is provided to control the subset of the heat-transfer fluid (16) which is to pass through the buffer tank (21) for charging the buffer tank (21) and for releasing thermal energy from the buffer tank (21), and to control the subset of the heat-transfer fluid (16) which is to pass via the by-pass line (23)

12. Method for reducing the drop in temperature in the supply air stream in defrost mode at an air handling system (1) comprising an air handling unit (2) provided with an adjustable rotary heat exchanger (3), which in heating mode recovers thermal energy from an exhaust air stream (4) and transfers the thermal energy to a supply air stream (5), said air handling system (1) further comprises a heat pump (6), which in heating mode recovers thermal energy from the exhaust air stream (4) and transfers the thermal energy to the supply air stream (5), wherein the heat pump (6) comprises at least one refrigerant circuit (7) with a refrigerant (8), a compressor (9), a 4-way valve (10), an evaporator (11) and a condenser (12), and the heat pump (6) is provided in so called reversible mode for defrosting of the evaporator (11) by means of the 4-way valve (10) shifting the flow direction of the refrigerant (8), wherein heated refrigerant (8) is directed to the evaporator (11) instead of to the condenser (12), wherein a first coil (13) is provided in the exhaust air stream (4) in the flow direction after the rotary heat exchanger (3), wherein the first coil (13) is of the type DX coil and is connected to the refrigerant circuit (7) and in the heating mode constitutes the evaporator (11) further a second coil (14) is provided in the supply air stream (5) in the flow direction after the rotary heat exchanger (3), wherein the system (1) comprises a heat-transfer fluid circuit (15), which comprises a heat-transfer fluid (16) and a circulation pump (17) which circulates the heat-transfer fluid (16) in the heat-transfer fluid circuit (15), wherein the second coil (14) is of the type liquid coil and is arranged to be connected to the heat transfer fluid circuit (15), wherein the system further comprises a plate heat exchanger (19) which comprises a primary circuit (18), wherein the refrigerant circuit (7) is arranged to be connected to the primary circuit (18), wherein the plate heat exchanger (19) in the heating mode constitutes the condenser (12), wherein the plate heat exchanger (19) comprises a secondary circuit (20), wherein the heat-transfer fluid circuit (15) is arranged to be connected to the secondary circuit (20), wherein the heat pump (6) while operating exchanges thermal energy between the exhaust air stream (4) and the supply air stream (5) partially in an indirect manner, that is indirectly with the supply air stream (5) but directly with the exhaust air stream (4), and the heat-transfer fluid circuit (15) further comprises a buffer tank (21), a 3-way control valve (22) and a by-pass line (23), and a control equipment (26) which controls the operation of the heat pump (6), the circulation pump (17) and the control valve (22) wherein the amount of heat-transfer fluid (16) which passes through the buffer tank (21) and the amount of heat-transfer fluid (16) which passes via the by-pass line (23) is controlled for storing therma energy in non-defrost mode, by storing at least a subset of the heat-transfer fluid (16) in the buffer tank (21) and by releasing thermal energy to the supply air stream (5) in the defrost mode, by means that stored heat-transfer fluid (16) flows from the buffer tank (21) to the second coil (14) and further to the secondary circuit (20) of the plate heat exchanger (19).

13. Method according to claim 12, wherein the buffer tank (21) comprises at least a first temperature sensor (24), and at least a second temperature sensor (25) is provided in the supply air stream (5) after the second coil (14), and the control equipment (26) makes sure that the heat-transfer fluid (16) is heated to a desired temperature and is stored in the buffer tank (21) in non-defrost mode by controlling the heat pump (6), the circulation pump (17) and the control valve (22) on the basis of the values from the temperature sensors (24, 25).

14. Method according to claim 13, wherein the control equipment (26), on the basis of the second temperature sensor (25), in defrost mode controls to hold the temperature in the supply air stream (5) at a desired value by controlling the heat pump (6), the circulation pump (17) and the control valve (22) such that an appropriate amount of heated heat-transfer fluid (16) flows from the buffer tank (21) to the second coil (14) and further to the secondary circuit (20) of the plate heat exchanger (19), wherein the accumulated thermal energy is released to the supply air stream (5) for minimising the drop in temperature of the supply air stream in defrost mode.

15. Method according to any of the claims 12-14, wherein the buffer tank (21) comprises an electric heater (27) which is controlled by the control equipment (26) such that the heat-transfer fluid (16) in the buffer tank (21) is heated to a desired temperature when required.

## Patentansprüche

1. Luftbehandlungssystem (1), mit einer Luftbehandlungseinheit (2), die mit einem einstellbaren Rotationswärmetauscher (3) versehen ist, der im Heizmodus dazu vorgesehen ist, Wärmeenergie aus einem Abluftstrom (4) zurückzugewinnen und die Wärmeenergie und Feuchtigkeit auf einen Zuluftstrom (5) zu übertragen, wobei das Luftbehandlungssystem (1) weiterhin eine Wärmepumpe (6) aufweist, die dazu vorgesehen ist, im Heizmodus Wärmeenergie von dem Abluftstrom (4) zurückzugewinnen und die Wärmeenergie auf den Zuluftstrom (5) zu übertragen, und wobei die Wärmepumpe (6) zumindest einen Kältemittelkreislauf (7) mit einem Kältemittel (8), einen Kompressor (9), ein 4-Wege-Ventil (10), einen Verdampfer (11) und einen Verflüssiger (12) aufweist, wobei die Wärmepumpe (6) dazu vorgesehen ist, in einem so genannten umgekehrten Modus zum Entfrosten des Verdampfers (11) mittels des 4-Wege-Ventils (10) die Strömungsrichtung des Kältemittels (8) umzusetzen, wobei das erwärmte Kältemittel (8) zu dem Verdampfer (11) anstatt zu dem Verflüssiger (12) gerichtet wird, wobei ein erstes Coil (13) in dem Abluftstrom (4) in der Strömungsrichtung nach dem Rotationswärmetauscher (3) vorgesehen ist, wobei das erste Coil (13) vom Typ eines DX-Coils ist und mit dem Kältemittelkreislauf (7) verbunden ist und in dem Heizmodus den Verdampfer (11) darstellt, wobei weiterhin ein zweites Coil (14) in dem Zuluftstrom (5) in der Strömungsrichtung nach dem Rotationswärmetauscher (3) vorgesehen ist, wobei das System (1) einen Wärmeübertragungsfluid-Kreislauf (15) aufweist, der ein Wärmeübertragungsfluid (16) und eine Zirkulationspumpe (17) aufweist, die dazu vorgesehen ist, das Wärmeübertragungsfluid (16) in dem Wärmeübertragungsfluid-Kreislauf (15) zu zirkulieren, wobei das zweite Coil (14) von dem Typ eines Flüssigkeits-Coils ist und angeordnet ist, um mit dem Wärmeübertragungsfluid-Kreislauf (15) verbunden zu werden, wobei das System weiterhin einen Plattenwärmetauscher (19) aufweist, der einen Primärkreislauf (18) aufweist, wobei der Kältemittelkreislauf (7) dazu angeordnet ist, mit dem Primärkreislauf (18) verbunden zu werden, wobei der Plattenwärmetauscher (19) im Heizmodus den Verflüssiger (12) darstellt, wobei der Plattenwärmetauscher (19) einen Sekundärkreislauf (20) aufweist, wobei der Wärmeübertragungsfluid-Kreislauf (15) dazu angeordnet ist, mit dem Sekundärkreislauf (20) verbunden zu werden, wobei die Wärmepumpe (6) dazu vorgesehen ist, Wärmeenergie zwischen dem Abluftstrom (4) und dem Zuluftstrom (5) teilweise in indirekter Weise auszutauschen, d.h. indirekt bezüglich des Zuluftstroms (5), jedoch direkt bezüglich des Abluftstroms (4), und wobei der Wärmeübertragungsfluid-Kreislauf (15) weiterhin einen Puffertank (21), ein 3-Wege-Steuerungsventil (22) und eine Bypass-Leitung (23) aufweist, wobei das Steuerungsventil (22) dazu vorgesehen ist, den Puffertank (21) über die Bypass-Leitung (23) vollständig oder teilweise zu überbrücken, und der Puffertank (21) dazu vorgesehen ist, im Nicht-Entfrostungsmodus durch Speichern einer Untermenge des Wärmeübertragungsfluids (16) in dem Puffertank (21) Wärmeenergie zu akkumulieren, und weiterhin dazu vorgesehen ist, im Entfrostungsmodus des Verdampfers (11) die akkumulierte Wärmeenergie über das zweite Coil (14) in den Zuluftstrom (5) freizusetzen, und wobei das Steuerungsventil (22) dazu vorgesehen ist, die Untermenge des Wärmeübertragungsfluids (16), die durch den Puffertank (21) zum Laden des Puffertanks (21) und zum Freisetzen von Wärmeenergie aus dem Puffertank (21) gehen soll, und die Untermenge des Wärmeübertragungsfluids (16) zu steuern, die über die Bypass-Leitung (23) gehen soll, zu steuern.

2. Luftbehandlungssystem (1) nach Anspruch 1, wobei der Puffertank (21) zumindest einen ersten Temperatursensor (24) aufweist, wobei zumindest ein zweiter Temperatursensor (25) in dem Zuluftstrom (5) nach dem zweiten Coil (14) vorgesehen ist, und das Luftbehandlungssystem (1) eine Steuerungsausrüstung (26) aufweist, die dazu vorgesehen ist zu steuern, dass das Wärmeübertragungsfluid (16) auf eine gewünschte Temperatur erwärmt und in dem Puffertank (21) gespeichert wird, durch Steuern der Wärmepumpe (6), der Zirkulationspumpe (17) und des Steuerungsventils (22) auf der Basis der Werte von den Temperatursensoren (24, 25).

3. Luftbehandlungssystem (1) nach Anspruch 2, wobei die Steuerungsausrüstung (26) dazu vorgesehen ist, im Entfrostungsmodus die Temperatur in dem Zuluftstrom (5) durch Steuern der Wärmepumpe (6), der Zirkulationspumpe (17) und des Steuerungsventils (22) auf einem gewünschten Wert zu halten, derart, dass eine geeignete Menge an erwärmtem Wärmeübertragungsfluid (16) von dem Puffertank (21) zu dem zweiten Coil (14) strömt, wobei die akkumulierte Wärmeenergie in den Zuluftstrom (5) zum Minimieren des Temperaturabfalls des Zuluftstroms im Entfrostungsmodus freigesetzt wird.

4. Luftbehandlungssystem (1) nach irgendeinem der obigen Ansprüche, wobei der Puffertank (21) eine elektrische Heizung (27) aufweist, die dazu vorgesehen ist, das Wärmeübertragungsfluid (16) in dem Puffertank (21) auf eine gewünschte Temperatur zu erwärmen.

5. Luftbehandlungssystem (1) nach irgendeinem der obigen Ansprüche, wobei der Kältemittelkreislauf (7) ein Kältemittel (8) mit einem GWP ≤ 1000 aufweist.

6. Luftbehandlungssystem (1) nach irgendeinem der obigen Ansprüche, wobei der Kältemittelkreislauf (7) ein Kältemittel (8) vom Typ HFO aufweist.

7. Luftbehandlungssystem (1) nach irgendeinem der obigen Ansprüche, wobei der Wärmeübertragungsfluid-Kreislauf (15) ein Wärmeübertragungsfluid (16) basierend auf Glycol aufweist.

8. Luftbehandlungssystem (1) nach irgendeinem der obigen Ansprüche, wobei das Kältemittel (8) ein HFC-Kältemittel, vorzugsweise R32 ist.

9. Luftbehandlungssystem (1) nach irgendeinem der Ansprüche 1-7, wobei das Kältemittel (8) ein Gemisch aus zumindest zwei der Typen HFO-, oder HFC-, oder HC-Kältemitteln, vorzugsweise R452B, L41y, oder L41z ist.

10. Luftbehandlungssystem (1) nach irgendeinem der obigen Ansprüche, wobei das Wärmeübertragungsfluid (16) Korrossionsschutzmittel aufweist.

11. Luftbehandlungssystem (1), mit einer Luftbehandlungseinheit (2), die mit einem einstellbaren Rotationswärmetauscher (3) versehen ist, der im Heizmodus dazu vorgesehen ist, Wärmeenergie aus einem Abluftstrom (4) zurückzugewinnen und die Wärmeenergie und Feuchtigkeit auf einen Zuluftstrom (5) zu übertragen, wobei das Luftbehandlungssystem (1) weiterhin eine Wärmepumpe (6) aufweist, die dazu vorgesehen ist, im Heizmodus Wärmeenergie aus dem Abluftstrom (4) zurückzugewinnen und die Wärmeenergie auf den Zuluftstrom (5) zu übertragen, und die Wärmepumpe (6) zumindest einen Kältemittelkreislauf (7) mit einem Kältemittel (8), einen Kompressor (9), ein 4-Wege-Ventil (10), einen Verdampfer (11) und einen Verflüssiger (12) aufweist, wobei die Wärmepumpe (6) dazu vorgesehen ist, in einem so genannten umgekehrten Modus zum Entfrosten des Verdampfers (11) mittels des 4-Wege-Ventils (10) die Strömungsrichtung des Kältemittels (8) umzusetzen, wobei das erwärmte Kältemittel (8) zu dem Verdampfer (11) anstatt zu dem Verflüssiger (12) gerichtet wird, wobei ein erstes Coil (13) in dem Abluftstrom (4) in der Strömungsrichtung nach dem Rotationswärmetauscher (3) vorgesehen ist, wobei das System (1) einen ersten Wärmeübertragungsfluid-Kreislauf aufweist, wobei das erste Coil (13) von dem Typ eines Flüssigkeits-Coils ist und mit dem ersten Wärmeübertragungsfluid-Kreislauf verbunden ist, der ein erstes Wärmeübertragungsfluid und eine erste Zirkulationspumpe aufweist, die dazu vorgesehen ist das erste Wärmeübertragungsfluid in dem ersten Wärmeübertragungsfluid-Kreislauf zu zirkulieren, wobei das System weiterhin einen ersten Plattenwärmetauscher aufweist, der einen Primärkreislauf aufweist, und wobei der erste Wärmeübertragungsfluid-Kreislauf mit dem Primärkreislauf des ersten Plattenwärmetauschers verbunden ist, der in dem Heizmodus den Verdampfer darstellt, wobei weiterhin ein zweites Coil (14) in dem Zuluftstrom (5) in der Strömungsrichtung nach dem Rotationswärmetauscher (3) vorgesehen ist, wobei das System (1) einen zweiten Wärmeübertragungsfluid-Kreislauf (15) aufweist, der ein zweites Wärmeübertragungsfluid (16) und eine zweite Zirkulationspumpe (17) aufweist, die dazu vorgesehen ist, das zweite Wärmeübertragungsfluid (16) in dem zweiten Wärmeübertragungsfluid-Kreislauf (15) zu zirkulieren, wobei das zweite Coil (14) von dem Typ eines Flüssigkeits-Coils ist und dazu angeordnet ist, mit dem zweiten Wärmeübertragungsfluid-Kreislauf (15) verbunden zu werden, wobei das System weiterhin einen zweiten Plattenwärmetauscher (19) aufweist, der einen Sekundärkreislauf (20) aufweist, der dazu angeordnet ist, mit dem zweiten Wärmeübertragungsfluid-Kreislauf (15) verbunden zu werden, der in dem Heizmodus den Verflüssiger (12) darstellt, wobei der erste Plattenwärmetauscher einen Sekundärkreislauf aufweist, wobei der zweite Plattenwärmetauscher (19) einen Primärkreislauf (18) aufweist, wobei der Kältemittelkreislauf (7) der Wärmepumpe (6) dazu angeordnet ist, zwischen dem Sekundärkreislauf des ersten Plattenwärmetauschers und dem Primärkreislauf (18) des zweiten Plattenwärmetauschers (19) verbunden zu werden, wobei die Wärmepumpe (6) Wärmeenergie zwischen dem Abluftstrom (4) und dem Zuluftstrom (5) in einer vollständig indirekten Weise, d.h. indirekt bezüglich des Zuluftstroms (5) und indirekt bezüglich des Abluftstroms (4), über den ersten und den zweiten Plattenwärmetauscher austauscht, und wobei der zweite Wärmeübertragungsfluid-Kreislauf (15) weiterhin einen Puffertank (21), ein 3-Wege-Steuerungsventil (22) und eine Bypass-Leitung (23) aufweist, wobei das Steuerungsventil (22) dazu vorgesehen ist, den Puffertank (21) vollständig oder teilweise über die Bypass-Leitung (23) zu überbrücken, und der Puffertank (21) dazu vorgesehen ist, im Nicht-Entfrostungsmodus durch Speichern einer Untermenge des Wärmeübertragungsfluids (16) in dem Puffertank (21) Wärmeenergie zu akkumulieren, und weiterhin dazu vorgesehen ist, in dem Entfrostungsmodus des Verdampfers (11) die akkumulierte Wärmeenergie in den Zuluftstrom (5) über das zweite Coil (14) freizusetzen, und wobei das Steuerungsventil (22) dazu vorgesehen ist, die Untermenge des Wärmeübertragungsfluids (16), das durch den Puffertank (21) zum Laden des Puffertanks (21) und zum Freisetzen von Wärmeenergie aus dem Puffertank (21) gehen soll, und die Untermenge des Wärmeübertragungsfluids (16), das über die Bypass-Leitung (23) gehen soll, zu steuern.

12. Verfahren zum Verringern des Temperaturabfalls im Zuluftstrom im Entfrostungsmodus bei einem Luftbehandlungssystem (1), das eine Luftbehandlungseinheit (2) aufweist, die mit einem einstellbaren Rotationswärmetauscher (3) versehen ist, der im Heizmodus Wärmeenergie aus einem Abluftstrom (4) zurückgewinnt und die Wärmeenergie auf einen Zuluftstrom (5) überträgt, wobei das Luftbehandlungssystem (1) weiterhin eine Wärmepumpe (6) aufweist, die im Heizmodus Wärmeenergie aus dem Abluftstrom (4) zurückgewinnt und die Wärmeenergie auf den Zuluftstrom (5) überträgt, wobei die Wärmepumpe (6) zumindest einen Kältemittelkreislauf (7) mit einem Kältemittel (8), einen Kompressor (9), ein 4-Wege-Ventil (10), einen Verdampfer (11) und einen Verflüssiger (12) aufweist, und die Wärmepumpe (6) dazu vorgesehen ist, in einem so genannten umgekehrten Modus zum Entfrosten des Verdampfers (11) mittels des 4-Wege-Ventils (10) die Strömungsrichtung des Kältemittels (8) umzusetzen, wobei erwärmtes Kältemittel (8) zu dem Verdampfer (11) anstatt zu dem Verflüssiger (12) gerichtet wird, wobei ein erstes Coil (13) in dem Abluftstrom (4) in der Strömungsrichtung nach dem Rotationswärmetauscher (3) vorgesehen ist, wobei das erste Coil (13) von dem Typ eines DX-Coils ist und mit dem Kältemittelkreislauf (7) verbunden ist und in dem Heizmodus den Verdampfer (11) darstellt, wobei weiterhin ein zweites Coil (14) in dem Zuluftstrom (5) in der Strömungsrichtung nach dem Rotationswärmetauscher (3) vorgesehen ist, wobei das System (1) einen Wärmeübertragungsfluid-Kreislauf (15) aufweist, der ein Wärmeübertragungsfluid (16) und eine Zirkulationspumpe (17) aufweist, die das Wärmeübertragungsfluid (16) in dem Wärmeübertragungsfluid-Kreislauf (15) zirkuliert, wobei das zweite Coil (14) von dem Typ eines Flüssigkeits-Coils ist und dazu angeordnet ist, mit dem Wärmeübertragungsfluid-Kreislauf (15) verbunden zu werden, wobei das System weiterhin einen Plattenwärmetauscher (19) aufweist, der einen Primärkreislauf (18) aufweist, wobei der Kältemittelkreislauf (7) dazu angeordnet ist, mit dem Primärkreislauf (18) verbunden zu werden, wobei der Plattenwärmetauscher (19) in dem Heizmodus den Verflüssiger (12) darstellt, wobei der Plattenwärmetauscher (19) einen Sekundärkreislauf (20) aufweist, wobei der Wärmeübertragungsfluid-Kreislauf (15) dazu angeordnet ist, mit dem Sekundärkreislauf (20) verbunden zu werden, wobei die Wärmepumpe (6), während sie arbeitet, Wärmeenergie zwischen dem Abluftstrom (4) und dem Zuluftstrom (5) teilweise in einer indirekten Weise austauscht, das heißt indirekt bezüglich des Zuluftstroms (5), jedoch direkt bezüglich des Abluftstroms (4), und der Wärmeübertragungsfluid-Kreislauf (15) weiterhin einen Puffertank (21), ein 3-Wege-Steuerungsventil (22) und eine Bypass-Leitung (23) aufweist, und eine Steuerungsausrüstung (26), die den Betrieb der Wärmepumpe (6), der Zirkulationspumpe (17) und des Steuerungsventils (22) steuert, wobei die Menge an Wärmeübertragungsfluid (16), die durch den Puffertank (21) geht, und die Menge an Wärmeübertragungsfluid (16), die über die Bypass-Leitung (23) durchgeht, zum Speichern von Wärmeenergie im Nicht-Entfrostungsmodus durch Speichern zumindest einer Untermenge des Wärmeübertragungsfluids (16) in dem Puffertank (21) und durch Freisetzen von Wärmeenergie an den Zuluftstrom (5) in dem Entfrostungsmodus gesteuert wird, indem das gespeicherte Wärmeübertragungsfluid (16) von dem Puffertank (21) zu dem zweiten Coil (14) und weiter zu dem Sekundärkreislauf (20) des Plattenwärmetauschers (19) strömt.

13. Verfahren nach Anspruch 12, wobei der Puffertank (21) zumindest einen ersten Temperatursensor (24) und zumindest einen zweiten Temperatursensor (25) aufweist, der in dem Zuluftstrom (5) nach dem zweiten Coil (14) vorgesehen ist, und wobei die Steuerungsausrüstung (26) sicherstellt, dass das Wärmeübertragungsfluid (16) durch Steuern der Wärmepumpe (6), der Zirkulationspumpe (17) und des Steuerungsventils (22) auf der Basis von den Werten von den Temperatursensoren (24, 25) auf eine gewünschte Temperatur erwärmt und in dem Puffertank (21) im Nicht-Entfrostungsmodus gespeichert wird.

14. Verfahren nach Anspruch 13, wobei die Steuerungsausrüstung (26), auf der Basis des zweiten Temperatursensors (25), im Entfrostungsmodus steuert, dass die Temperatur in dem Zuluftstrom (5) durch Steuern der Wärmepumpe (6), der Zirkulationspumpe (17) und des Steuerungsventils (22) auf einem gewünschten Wert gehalten wird, derart, dass eine geeignete Menge an erwärmtem Wärmeübertragungsfluid (16) von dem Puffertank (21) zu dem zweiten Coil (14) und weiter zu dem Sekundärkreislauf (20) des Plattenwärmetauschers (19) strömt, wobei die akkumulierte Wärmeenergie an den Zuluftstrom (5) zum Minimieren des Temperaturabfalls des Zuluftstroms im Entfrostungsmodus freigesetzt wird.

15. Verfahren nach irgendeinem der Ansprüche 12-14, wobei der Puffertank (21) eine elektrische Heizung (27) aufweist, die durch die Steuerungsausrüstung (26) gesteuert wird, derart, dass das Wärmeübertragungsfluid (16) in dem Puffertank (21) erforderlichenfalls auf eine gewünschte Temperatur erwärmt wird.

## Revendications

1. Système de traitement d'air (1) comprenant une unité de traitement de l'air (2) dotée d'un échangeur de chaleur rotatif réglable (3) qui, en mode chauffage, est agencé pour récupérer l'énergie thermique d'un flux d'air extrait (4) et transférer l'énergie thermique et l'humidité à un flux d'air entrant (5), ledit système de traitement d'air (1) comprenant en outre une pompe à chaleur (6) prévue pour, en mode chauffage, récupérer l'énergie thermique du flux d'air extrait (4) et transférer l'énergie thermique au flux d'air entrant (5), et la pompe à chaleur (6) comprenant au moins un circuit frigorifique (7) avec un réfrigérant (8), un compresseur (9), une vanne à quatre voies (10), un évaporateur (11) et un condenseur (12), dans lequel la pompe à chaleur (6) permet en mode dit réversible le dégivrage de l'évaporateur (11) au moyen de la vanne à quatre voies (10) qui modifie le sens d'écoulement du réfrigérant (8), de sorte que le réfrigérant chauffé (8) est dirigé vers l'évaporateur (11) au lieu du condenseur (12), dans lequel un premier serpentin (13) est placé dans le flux d'air extrait (4) dans la direction du flux après l'échangeur de chaleur rotatif (3), dans lequel le premier serpentin (13) est du type serpentin DX et est connecté au circuit frigorifique (7) et constitue en mode chauffage l'évaporateur (11), et en outre un second serpentin (14) est placé dans le flux d'air entrant (5) dans la direction du flux après l'échangeur de chaleur rotatif (3), dans lequel le système (1) comprend un circuit de fluide caloporteur (15), qui comprend un fluide caloporteur (16) et une pompe de circulation (17) prévue pour faire circuler le fluide caloporteur (16) dans le circuit de fluide caloporteur (15), dans lequel le second serpentin (14) est du type serpentin à liquide et est prévu pour être connecté au circuit de fluide caloporteur (15), dans lequel le système comprend en outre un échangeur de chaleur à plaques (19) qui comprend un circuit primaire (18), dans lequel le circuit frigorifique (7) est prévu pour être connecté au circuit primaire (18), dans lequel l'échangeur de chaleur à plaques (19) en mode chauffage constitue le condenseur (12), dans lequel l'échangeur de chaleur à plaques (19) comprend un circuit secondaire (20), dans lequel le circuit de fluide caloporteur (15) est conçu pour être relié au circuit secondaire (20), dans lequel la pompe à chaleur (6) est conçue pour échanger de l'énergie thermique entre le flux d'air extrait (4) et le flux d'air entrant (5) partiellement de manière indirecte, c'est-à-dire indirectement avec le flux d'air entrant (5) mais directement avec le flux d'air extrait (4), et le circuit de fluide caloporteur (15) comprend en outre un réservoir tampon (21), une vanne de régulation à trois voies (22) et une conduite de dérivation (23), dans lequel la vanne de régulation (22) est prévue pour contourner entièrement ou partiellement le réservoir tampon (21) via la conduite de dérivation (23), et le réservoir tampon (21) est prévu pour accumuler de l'énergie thermique en mode de non-dégivrage en stockant une fraction du fluide caloporteur (16) dans le réservoir tampon (21), et est en outre prévu pour, en mode dégivrage de l'évaporateur (11), libérer ladite énergie thermique accumulée dans le flux d'air entrant (5) par l'intermédiaire du second serpentin (14), et la vanne de régulation (22) est prévue pour régler la fraction du fluide caloporteur (16) qui doit traverser le réservoir tampon (21) pour charger le réservoir tampon (21) et pour libérer l'énergie thermique du réservoir tampon (21), et pour régler la fraction du fluide caloporteur (16) qui doit circuler dans la conduite de dérivation (23).

2. Système de traitement d'air (1) selon la revendication 1, dans lequel le réservoir tampon (21) comprend au moins un premier capteur de température (24), dans lequel au moins un second capteur de température (25) est placé dans le flux d'air entrant (5) après le second serpentin (14), et le système de traitement de l'air (1) comprend un équipement de commande (26) qui est prévu pour contrôler que le fluide caloporteur (16) est chauffé à une température souhaitée et est stocké dans le réservoir tampon (21) en réglant la pompe à chaleur (6), la pompe de circulation (17) et la vanne de régulation (22) sur la base des valeurs fournies par les capteurs de température (24, 25).

3. Système de traitement d'air (1) selon la revendication 2, dans lequel l'équipement de commande (26) est prévu pour, en mode dégivrage, maintenir la température du flux d'air entrant (5) à une valeur souhaitée en réglant la pompe à chaleur (6), la pompe de circulation (17) et la vanne de régulation (22) de sorte qu'une quantité appropriée de fluide caloporteur chauffé (16) s'écoule du réservoir tampon (21) vers le second serpentin (14), et dans lequel l'énergie thermique accumulée est libérée dans le flux d'air entrant (5) pour minimiser la chute de température du flux d'air entrant en mode dégivrage.

4. . Système de traitement d'air (1) selon l'une quelconque des revendications précédentes, dans lequel le réservoir tampon (21) comprend un chauffage électrique (27) qui est prévu pour chauffer le fluide caloporteur (16) dans le réservoir tampon (21) à une température souhaitée.

5. Système de traitement d'air (1) selon l'une quelconque des revendications précédentes, dans lequel le circuit frigorifique (7) comprend un réfrigérant (8) ayant un PRG ≤ 1000.

6. Système de traitement d'air (1) selon l'une quelconque des revendications précédentes, dans lequel le circuit frigorifique (7) comprend un réfrigérant (8) de type HFO.

7. Système de traitement d'air (1) selon l'une quelconque des revendications précédentes, dans lequel le circuit de fluide caloporteur (15) comprend un fluide caloporteur (8) à base de glycol.

8. Système de traitement d'air (1) selon l'une quelconque des revendications précédentes, dans lequel le réfrigérant (8) est un réfrigérant HFC, de préférence R32.

9. Système de traitement d'air (1) selon l'une quelconque des revendications 1 à 7, dans lequel le réfrigérant (8) est un mélange d'au moins deux réfrigérants parmi les types HFO, ou HFC ou HC, de préférence R452B, L41y ou L41z.

10. Système de traitement d'air (1) selon l'une quelconque des revendications précédentes, dans lequel le fluide caloporteur (16) comprend des inhibiteurs de corrosion.

11. Système de traitement d'air (1) comprenant une unité de traitement de l'air (2) dotée d'un échangeur de chaleur rotatif réglable (3) qui, en mode chauffage, est agencé pour récupérer l'énergie thermique d'un flux d'air extrait (4) et transférer l'énergie thermique et l'humidité à un flux d'air entrant (5), ledit système de traitement d'air (1) comprenant en outre une pompe à chaleur (6) prévue pour, en mode chauffage, récupérer l'énergie thermique du flux d'air extrait (4) et transférer l'énergie thermique au flux d'air entrant (5), et la pompe à chaleur (6) comprenant au moins un circuit frigorifique (7) avec un réfrigérant (8), un compresseur (9), une vanne à quatre voies (10), un évaporateur (11) et un condenseur (12), dans lequel la pompe à chaleur (6) est prévue dans un mode dit réversible pour dégivrer l'évaporateur (11) au moyen de la vanne à quatre voies (10) qui modifie le sens d'écoulement du réfrigérant (8), dans lequel le réfrigérant chauffé (8) est dirigé vers l'évaporateur (11) plutôt que vers le condenseur (12), dans lequel un premier serpentin (13) est disposé dans le flux d'air extrait (4) dans la direction du flux après l'échangeur de chaleur rotatif (3), dans lequel le système (1) comprend un premier circuit de fluide caloporteur, dans lequel le premier serpentin (13) est du type serpentin à liquide et est connecté au premier circuit de fluide caloporteur qui comprend un premier fluide caloporteur et une première pompe de circulation prévue pour faire circuler le premier fluide caloporteur dans le premier circuit de fluide caloporteur, dans lequel le système comprend en outre un premier échangeur de chaleur à plaques qui comprend un circuit primaire, et dans lequel le premier circuit de fluide caloporteur est connecté au circuit primaire du premier échangeur de chaleur à plaques qui, en mode chauffage, constitue l'évaporateur, un second serpentin (14) est en outre disposé dans le flux d'air entrant (5) dans la direction de l'écoulement après l'échangeur de chaleur rotatif (3), dans lequel le système (1) comprend un second circuit de fluide caloporteur (15) comprenant un second fluide caloporteur (16) et une second pompe de circulation (17) destinée à faire circuler le second fluide caloporteur (16) dans le second circuit de fluide caloporteur (15), dans lequel le second serpentin (14) est du type serpentin à liquide et est conçu pour être connecté au second circuit de fluide caloporteur (15), dans lequel le système comprend en outre un second échangeur de chaleur à plaques (19) qui comprend un circuit secondaire (20) conçu pour être connecté au second circuit de fluide caloporteur (15), qui, en mode chauffage, constitue le condenseur (12), dans lequel le premier échangeur de chaleur à plaques comprend un circuit secondaire, dans lequel le second échangeur de chaleur à plaques (19) comprend un circuit primaire (18), dans lequel le circuit frigorifique (7) de la pompe à chaleur (6) est conçu pour être connecté entre le circuit secondaire du premier échangeur de chaleur à plaques et le circuit primaire (18) du second échangeur de chaleur à plaques (19), dans lequel la pompe à chaleur (6) échange de l'énergie thermique entre le flux d'air extrait (4) et le flux d'air entrant (5) de manière totalement indirecte, c'est-à-dire indirectement avec le flux d'air entrant (5) et indirectement avec le flux d'air extrait (4), via les premier et second échangeurs de chaleur à plaques, et le second circuit de fluide caloporteur (15) comprend en outre un réservoir tampon (21), une vanne de régulation à trois voies (22) et une conduite de dérivation (23), dans lequel la vanne de régulation (22) est prévue pour contourner entièrement ou partiellement le réservoir tampon (21) via la conduite de dérivation (23), et le réservoir tampon (21) est prévu pour accumuler de l'énergie thermique en mode de non-dégivrage en stockant une fraction du fluide caloporteur (16) dans le réservoir tampon (21), et est en outre prévu pour, en mode dégivrage de l'évaporateur (11), libérer ladite énergie thermique accumulée dans le flux d'air entrant (5) par l'intermédiaire du second serpentin (14), et la vanne de régulation (22) est prévue pour régler la fraction du fluide caloporteur (16) qui doit passer à travers le réservoir tampon (21) pour charger le réservoir tampon (21) et pour libérer l'énergie thermique du réservoir tampon (21), et pour régler la fraction du fluide caloporteur (16) qui doit circuler dans la conduite de dérivation (23).

12. Procédé pour réduire la chute de température dans le flux d'air entrant en mode dégivrage dans un système de traitement d'air (1) comprenant une unité de traitement de l'air (2) dotée d'un échangeur de chaleur rotatif réglable (3) qui, en mode chauffage, est agencé pour récupérer l'énergie thermique d'un flux d'air extrait (4) et transférer l'énergie thermique à un flux d'air entrant (5), ledit système de traitement d'air (1) comprenant en outre une pompe à chaleur (6) prévue pour, en mode chauffage, récupérer l'énergie thermique du flux d'air extrait (4) et transférer l'énergie thermique au flux d'air entrant (5), dans lequel la pompe à chaleur (6) comprend au moins un circuit frigorifique (7) avec un réfrigérant (8), un compresseur (9), une vanne à quatre voies (10), un évaporateur (11) et un condenseur (12), et la pompe à chaleur (6) est prévue pour, en mode dit réversible, effectuer le dégivrage de l'évaporateur (11) au moyen de la vanne à quatre voies (10) qui modifie le sens d'écoulement du réfrigérant, dans lequel le réfrigérant chauffé (8) est dirigé vers l'évaporateur (11) plutôt que vers le condenseur (12) dans lequel un premier serpentin (13) est disposé dans le flux d'air extrait (4) dans la direction de l'écoulement après l'échangeur de chaleur rotatif (3), dans lequel le premier serpentin (13) est du type serpentin DX et est connecté au circuit frigorifique (7) et, en mode chauffage, constitue l'évaporateur (11), dans lequel un second serpentin (14) est disposé dans le flux d'air entrant (5) dans la direction de l'écoulement après l'échangeur de chaleur rotatif (3), dans lequel le système (1) comprend un circuit de fluide caloporteur (15), lequel comprend un fluide caloporteur (16) et une pompe de circulation (17) qui fait circuler le fluide caloporteur (16) dans le circuit de fluide caloporteur (15), dans lequel le second serpentin (14) est du type serpentin à liquide et est conçu pour être connecté au circuit de fluide caloporteur (15), dans lequel le système comprend en outre un échangeur de chaleur à plaques (19) qui comprend un circuit primaire (18), dans lequel le circuit frigorifique (7) est conçu pour être connecté au circuit primaire (18), dans lequel l'échangeur de chaleur à plaques (19), dans le mode chauffage, constitue le condenseur (12), dans lequel l'échangeur de chaleur à plaques (19) comprend un circuit secondaire (20), dans lequel le circuit de fluide caloporteur (15) est conçu pour être relié au circuit secondaire (20), dans lequel la pompe à chaleur (6) en mode fonctionnement opère les échanges d'énergie thermique entre le flux d'air extrait (4) et le flux d'air entrant (5), ce partiellement de manière indirecte, c'est-à-dire indirectement avec le flux d'air entrant (5) mais directement avec le flux d'air extrait (4), et le circuit de fluide caloporteur (15) comprend en outre un réservoir tampon (21), une vanne de régulation à trois voies (22) et une conduite de dérivation (23), et un équipement de commande (26) qui contrôle le fonctionnement de la pompe à chaleur (6), de la pompe de circulation (17) et de la vanne de régulation (22), dans lequel la quantité de fluide caloporteur (16) qui passe par le réservoir tampon (21) et la quantité de fluide caloporteur (16) qui passe par la conduite de dérivation (23) sont régulées pour le stockage de l'énergie thermique en mode non dégivrage, en stockant au moins une fraction du fluide caloporteur (16) dans le réservoir tampon (21) et en libérant de l'énergie thermique dans le flux d'air entrant (5) en mode dégivrage, de sorte que le fluide caloporteur stocké (16) s'écoule depuis le réservoir tampon (21) vers le second serpentin (14), puis vers le circuit secondaire (20) de l'échangeur de chaleur à plaques (19).

13. Procédé selon la revendication 12, dans lequel le réservoir tampon (21) comprend au moins un premier capteur de température (24), et au moins un second capteur de température (25) est disposé dans le flux d'air entrant (5) après le second serpentin (14), et l'équipement de commande (26) s'assure que le fluide caloporteur (16) est chauffé à une température souhaitée et est stocké dans le réservoir tampon (21) en mode non dégivrage en réglant la pompe à chaleur (6), la pompe de circulation (17) et la vanne de régulation (22) sur la base des valeurs provenant des capteurs de température (24, 25).

14. Procédé selon la revendication 13, dans lequel l'équipement de commande (26), sur la base du second capteur de température (25), en mode dégivrage, commande le maintien de la température dans le flux d'air entrant (5) à une valeur souhaitée en réglant la pompe à chaleur (6), la pompe de circulation (17) et la vanne de régulation (22) de manière telle qu'une quantité appropriée de fluide caloporteur chauffé (16) s'écoule depuis le réservoir tampon (21) vers le second serpentin (14) puis vers le circuit secondaire (20) de l'échangeur de chaleur à plaques (19), dans lequel l'énergie thermique accumulée est libérée dans le flux d'air entrant (5) afin de minimiser la chute de température du flux d'air entrant en mode dégivrage.

15. Procédé selon l'une quelconque des revendications 12 à 14, dans lequel le réservoir tampon (21) comprend un chauffage électrique (27) qui est commandé par l'équipement de commande (26) de manière telle que le fluide caloporteur (16) dans le réservoir tampon (21) soit chauffé à une température souhaitée quand cela est nécessaire.
